# EUROPEAN PATENT APPLICATION

(11) **EP 2 579 197 A1**
(43) Date of publication of application: **10.04.2013**
(21) Application number: 11786574.1
(22) Date of filing: 20.05.2011
(51) Int. Cl.: G06Q 20/00

(54) **METHOD FOR PERFORMING MULTI-PAYMENT USING MULTIPLE PAYMENT MEANS, DEVICE FOR PERFORMING MULTI-PAYMENT, AND PROGRAM FOR PERFORMING MULTI-PAYMENT**

(30) Priority: 25.05.2010 JP 2010119311
(71) Applicant: NEC Corporation, Tokyo 108-8001 (JP); NEC Soft, Ltd., Tokyo 136-8627 (JP)
(72) Inventor: NEZU Satoshi, Tokyo 108-8001 (JP); KAWANO Yoshitaka, Tokyo 136-8627 (JP)
(74) Representative: Betten & Resch
(86) International application number: PCT/JP2011/061668
(87) International publication number: WO 2011/148875

(57) **Abstract**

One settlement is made with multiple settlement means. Settlement means selected by the user, at least one of a settlement price allocated to each of the settlement means and a usage ratio allocated to each of the settlement means, and a total price to be settled are received from a site. Credit processing is performed for each price obtained by allocating the total price to the settlement means in accordance with the usage ratio or for each settlement price allocated to each of the settlement means. Sales determination processing is performed for each price obtained by allocating the total price to the settlement means in accordance with the usage ratio or for each settlement price allocated to each of the settlement means. A message indicating that the settlement has been finished is transmitted to the site. In the first settlement and second settlement, when all of the credit processing and the sales determination processing can be performed within the multi-settlement apparatus, the processing is performed within the multi-settlement apparatus, and when the credit processing and the sales determination processing cannot be performed within the multi-settlement apparatus, an external unit is requested to perform the processing.

## Description

### {Technical Field}

The present invention relates to settlement using multiple settlement means on a network.

### {Background Art}

Nowadays, e-commerce is widely, generally conducted on networks such as the Internet, mobile communication networks, and next-generation communication networks (which may be hereinafter referred to as "network" as accessary).

There are various kinds of settlement means to settle the price of a product and the like in e-commerce on the network.

Examples of settlement means include settlement using a credit card and prepaid electronic money, settlement by deduction from a bank account, settlement using convenient store payment with which a user can pay at a convenience store, and settlement using so-called cash-on-delivery with which a user can pay cash when a product is delivered.

PTL 1 describes an example of technique concerning settlement in e-commerce conducted in such network. A problem of the technique described in PTL 1 is to simplify settlement processing for purchase of products at multiple stores, alleviating the work load of users, and reduce the work time. Further, in order to solve this problem, when there are multiple products which can be settled by the same settlement means, the multiple products can be settled at a time even when the multiple products are sold at different stores. More specifically, the technique described in PTL 1 allows settlement over different stores, which achieves redaction of the work load of users and reduction of the work time.

### {Citation List}

### {Patent Literature}

{PTL 1} JP-A-2000-259705

### {Summary of Invention}

### {Technical Problem}

As described above, e-commerce is widely prevalent on a network, and techniques for simplifying the procedure have been developed. However, there is a problem in the above settlement method.

The problem is that when a user makes settlement in e-commerce on a network, the user has to select one of multiple settlement means even though multiple settlement means are prepared, and the user can use only one type of settlement means at a time. It is inconvenient for the user to be allowed to use only one type of many settlement means even though many settlement means are prepared as described above.

If only one settlement means can be selected in one settlement, it is impossible to make settlement by combining multiple available settlement means, e.g., when 10,000 yen is settled, a user is not allowed to pay 7,000 yen with a credit card and pay 3,000 yen with convenient store payment.

In normal circumstances, in a site allowing use of points, it is possible to combine available settlement means and points. As a matter of fact, in this case, using points, a price obtained by deducting a price corresponding to consumed points from the original price to be settled is settled. More specifically, this is not settlement using multiple settlement means but is simply a discount of the price to be settled.

When a small amount of balance remains in settlement means for managing available balance such as electronic money and points, the settlement cannot be used with such small amount of remaining balance, and this hinders circulation of electronic money and the like.

As described above, a user who wants to conduct e-commerce via a network (which may be hereinafter referred to as "user" as necessary) can select used settlement means from among multiple settlement means, but the user cannot make settlement by combining them. As a result, this reduces options of settlement methods available to the user, and ultimately, this leads to opportunity loss of transactions.

For example, as can be understood from paragraphs {0102} to {0105} of the specification and Fig. 9 of PTL 1, the technique described in PTL 1 allows only one settlement means to be selected, and it is impossibly to make one settlement using multiple settlement means.

Accordingly, it is an object of the present invention to provide a multi-settlement achieving method using multiple settlement means which is capable of making one settlement using multiple settlement means, a multi-settlement achieving apparatus, and a multi-settlement achieving program.

### {Solution to Problem}

According to a first aspect, there is provided a multi-settlement apparatus that mutually communicates with a site, which is connected to a terminal used by a user, the multi-settlement apparatus including:
a reception unit that receives, from the site, one or more settlement means selected by the user, at least one of a settlement price allocated to each of the settlement means and
a usage ratio allocated to each of the settlement means, and a total price to be settled;
a settlement plug-in that is provided for each of the settlement means, and is used for credit processing and sales determination processing;
a first settlement processing unit that performs the credit processing using the settlement plug-in for each price obtained by allocating the total price to the settlement means in accordance with the usage ratio or for each settlement price allocated;
a second settlement processing unit that performs sales determination processing using the settlement plug-in for each price obtained by allocating the total price to the settlement means in accordance with the usage ratio or for each settlement price allocated to each of the settlement means, after the credit processing for all the settlement means has been completed; and
a transmission unit that determines that the settlement has been completed after the sales determination processing for all of the settlement means had been completed, and
transmits to the site a message indicating that the settlement has been finished,
wherein when all of the credit processing and the sales determination processing can be performed within the multi-settlement apparatus, the first settlement processing unit and the second settlement processing unit perform the processing within the multi-settlement apparatus, and when the credit processing and the sales determination processing cannot be performed within the multi-settlement apparatus, the first settlement processing unit and the second settlement processing unit request an external unit to perform the processing.

According to a second aspect, there is provided a site connected to the multi-settlement apparatus, when the transmission unit transmits the message indicating that the settlement has been finished, the site gives the user a point calculated by multiplying the settled price and a point giving rate that is set for each of the settlement means.

According to a third aspect, there is provided a multi-settlement method performed by a multi-settlement apparatus that mutually communicates with a site, which is connected to a terminal used by a user,
the multi-settlement method including:
a reception step for receiving, from the site, one or more settlement means selected by the user, at least one of a settlement price allocated to each of the settlement means and
a usage ratio allocated to each of the settlement means, and a total price to be settled;
a step for preparing a settlement plug-in that is provided for each of the settlement means, and is used for credit processing and sales determination processing;
a first settlement step in which the credit processing is performed using the settlement plug-in for each price obtained by allocating the total price to the settlement means in accordance with the usage ratio or for each settlement price allocated;
a second settlement step in which sales determination processing is performed using the settlement plug-in for each price obtained by allocating the total price to the settlement means in accordance with the usage ratio or for each settlement price allocated to each of the settlement means, after the credit processing for all the settlement means has been completed; and
a transmission step in which the settlement is determined to have been completed after the sales determination professing for all of the settlement means had been completed,
and a message indicating that the settlement has been finished is transmitter to the site,
wherein in the first settlement step and the second settlement step, when all of the credit processing and the sales determination processing can be performed within the multi-settlement apparatus, the processing is performer within the multi-settlement apparatus, and when the credit processing and the sales determination processing cannot be performed within the multi-settlement apparatus, an external unit is requested to perform the processing.

According to a fourth aspect, there is provided a multi-settlement program incorporated into a multi-settlement apparatus that mutually communicates with a site,
which is connected to a terminal used by a user,
wherein the multi-settlement program causes a computer to function as the multi-settlement apparatus including:
a reception unit that receives, from the site, one or more settlement means selected by the user, at least one of a settlement price allocated to each of the settlement means and
a usage ratio allocated to each of the settlement means, and a total price to be settled;
a settlement plug-in that is provided for each of the settlement means, and is used for credit processing and sales determination processing;
a first settlement processing unit that performs the credit processing using the settlement plug-in for each price obtained by allocating the total price to the settlement means in accordance with the usage ratio or for each settlement price allocated;
a second settlement processing unit that performs sales determination processing using the settlement plug-in for each price obtained by allocating the total price to the settlement means in accordance with the usage ratio or for each settlement price allocated to each of the settlement means, after the credit processing for all the settlement means has been completed; and
a transmission unit that determines that the settlement has been completed after the sales determination processing for all of the settlement means had been completed, and transmits to the site a message indicating that the settlement has been finished, wherein when all of the credit processing and the sales determination processing can be performed within the multi-settlement apparatus, the first settlement processing unit and the second settlement processing unit perform the processing within the multi-settlement apparatus, and when the credit processing and the sales determination processing cannot be performed within the multi-settlement apparatus, the first settlement processing unit and the second settlement processing unit request an external unit to perform the processing.

### {Advantageous Effects of the Invention}

According to the present invention, settlement means is freely selected from multiple settlement means, and settlement is made by combining them. Therefore, one settlement can be made using multiple settlement means.

### {Brief Description of Drawings}

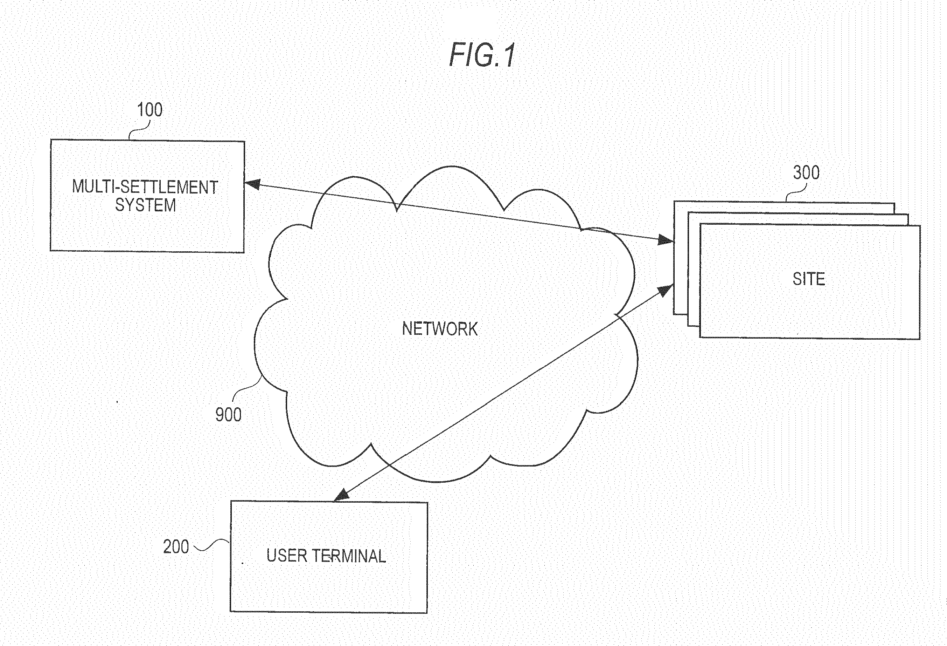

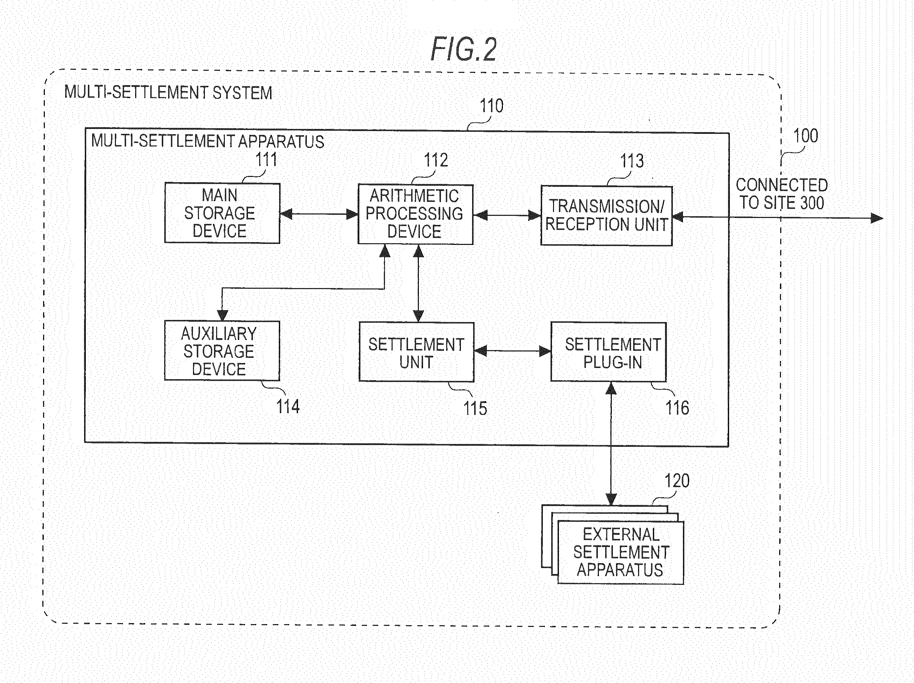

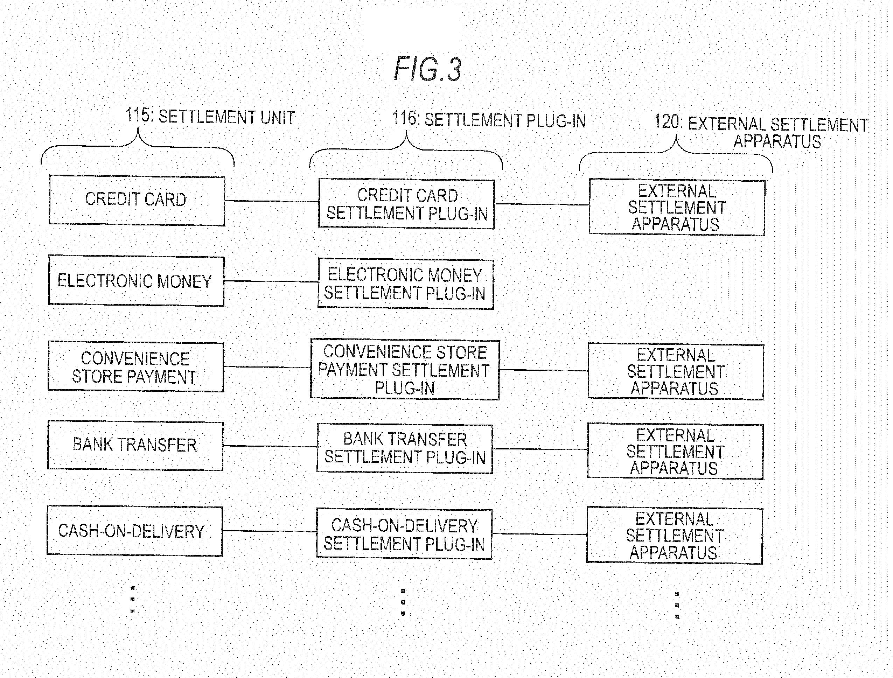

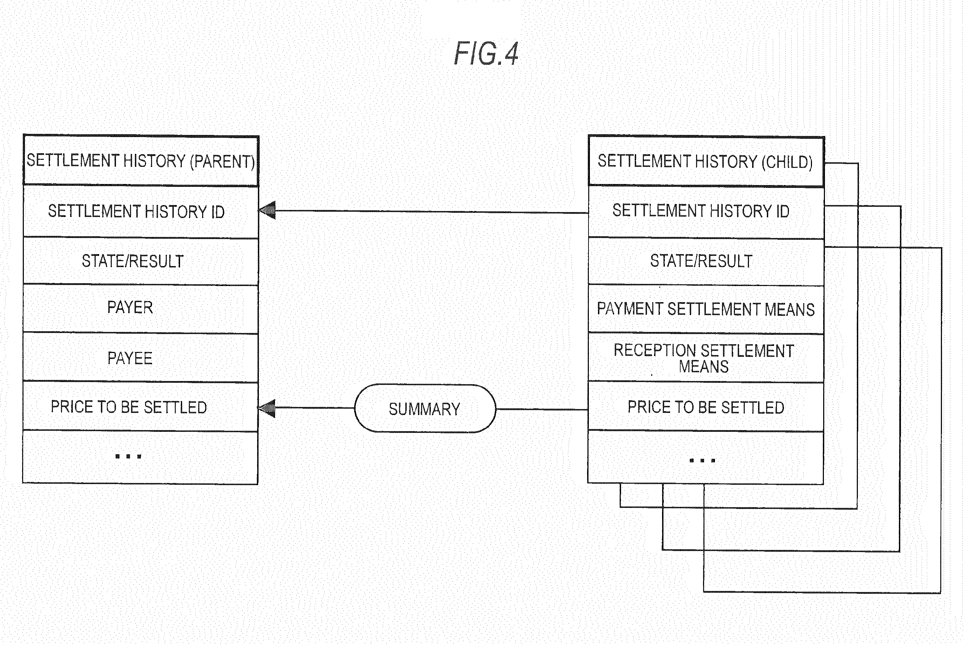

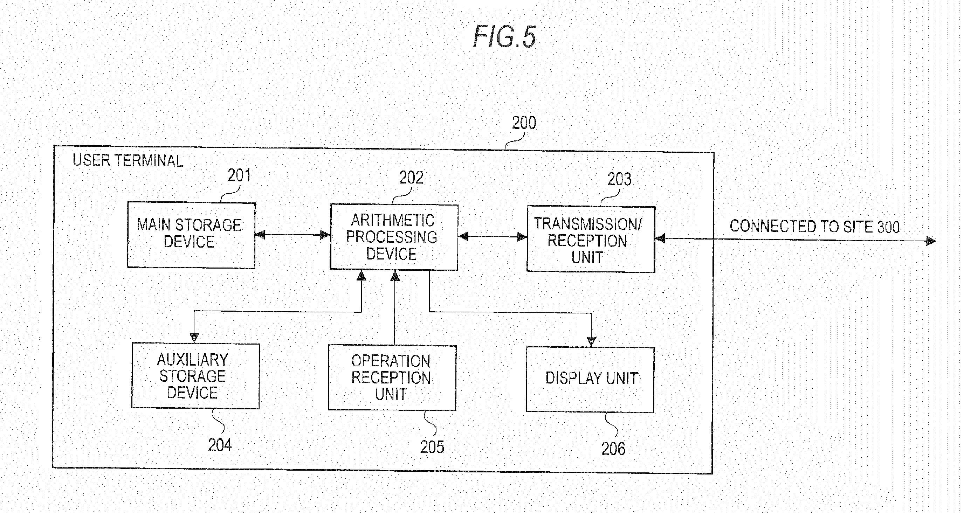

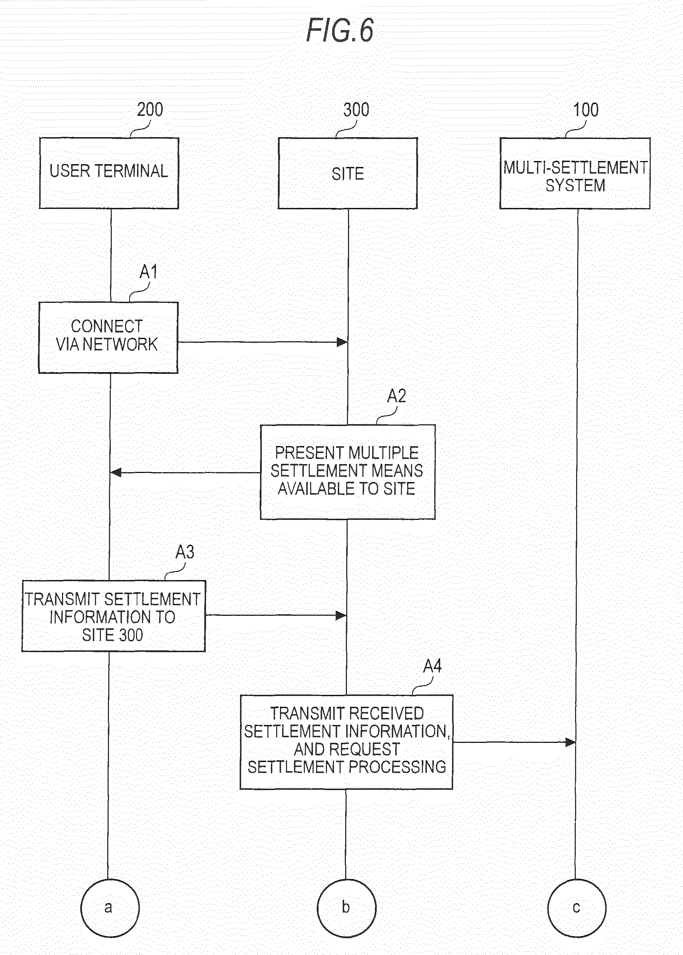

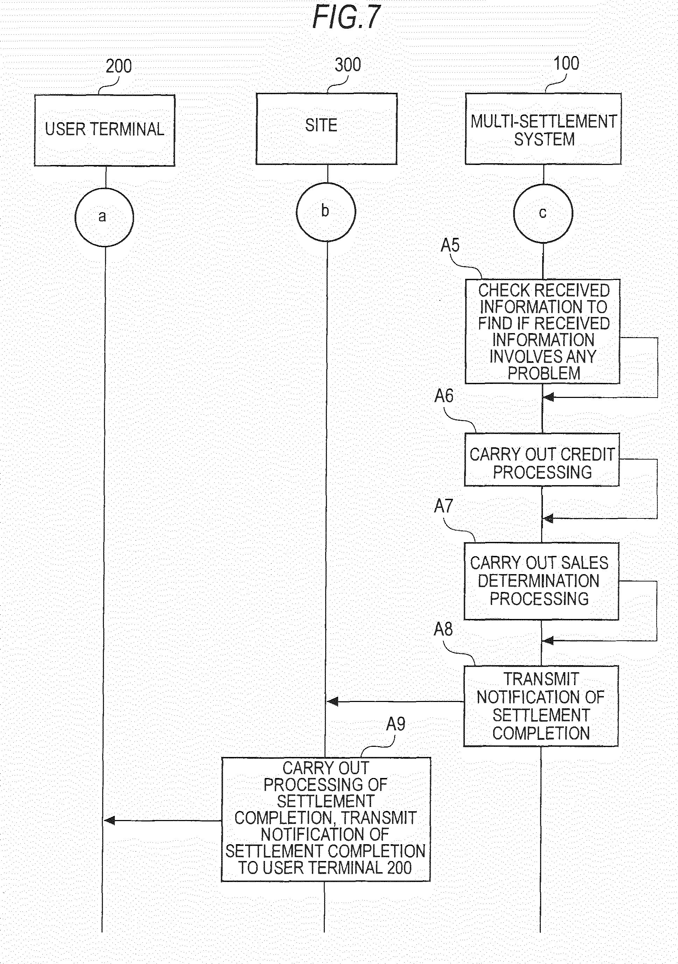

{Fig. 1} A figure illustrates a basic configuration of an entire embodiment of the present invention.
{Fig. 2} A figure illustrates a basic configuration of a multi-settlement system according to the embodiment of the present invention.
{Fig. 3} A figure illustrates relationship between a settlement unit, a settlement plug-in, and an external settlement apparatus according to the embodiment of the present invention.
{Fig. 4} A figure illustrates management of history in the embodiment of the present invention.
{Fig. 5} A figure illustrates a basic configuration of a user terminal in the embodiment of the present invention
{Fig. 6} A sequence diagram (1/2) illustrates basic operation of the entire embodiment of the present invention.
{Fig. 7} A sequence diagram (2/2) illustrating basic operation of the entire embodiment of the present invention.

### {Reference Signs List}

- 100: multi-settlement system
- 110: multi-settlement apparatus
- 111: main storage device
- 112: arithmetic processing device
- 113: transmission/reception unit
- 114: auxiliary storage device
- 115: settlement unit
- 116: settlement plug-in
- 120: external settlement apparatus
- 200: user terminal
- 201: main storage device
- 202: arithmetic processing device
- 203: transmission/reception unit
- 204: auxiliary storage device
- 205: operation reception unit
- 206: display unit
- 300: site
- 900: network

### {Description of Embodiment}

Subsequently, an exemplary embodiment of the present invention will be explained in detail with reference to drawings.

Fig. 1 is a figure illustrating the entire embodiment. As shown in Fig. 1, the present embodiment includes a multi-settlement system 100, a user terminal 200, a plurality of sites 300, and a network 900.

The multi-settlement system 100 is a system for carrying out processing of multi-settlement. More specifically, the multi-settlenent system 100 is, e.g., a group of servers provided on a network by a company.

The user terminal 200 is a terminal used by a user for e-commerce. More specifically, the user terminal 200 may be achieved with any device, but for example, the user terminal 200 is achieved with a personal computer, a cellular phone, and the like.

The plurality of sites 300 is a site for conducting e-commerce such as sales of products and contents by means of the network. The plurality of sites 300 is connected to each of the multi-settlement system 100 and the user terminal 200 with each other via the network 900. The site 300 is actually achieved by viewing a document on the network, for example, on a web server using a web browser provided in the user terminal 200.

The network 900 is, for example, the Internet, but is not limited thereto. The communication method on which the network 900 is based is not particularly limited. Whether the network 900 is connected via wires or connected wirelessly is not particularly limited.

Subsequently, the multi-settlement system 100 will be explained in detail with reference to Fig. 2. As shown in Fig. 2, the multi-settlement system 100 includes a multi-settlement apparatus 110 and an external settlement apparatus 120.

The multi-settlement apparatus 110 includes a main storage device 111, an arithmetic processing device 112, a transmission/reception unit 113; an auxiliary storage device 114, a settlement unit 115, and a settlement plug-in 116.

The main storage device 111 is a storage device such as a RAM (Random Access Memory). The arithmetic processing device 112 is a computing device such as a CPU (Central Processing Unit), which performs arithmetic processing. The transmission/reception unit 113 is a portion for performing communication via the network 900.

The auxiliary storage device 114 is a storage device such as an HDD (Hard disk drive) and an SSD (solid state drive), which stores various kinds of data and programs.

The settlement unit 115 and the settlement plug-in 116 are portions unique to the present embodiment, and are portions for carrying out processing of settlement. The settlement unit 115 and the settlement plug-in 116 are achieved by causing the arithmetic processing device 112 to read programs (software) stored in the auxiliary storage device 114 and perform arithmetic professing using the programs thus read and the main storage device 111.

The settlement unit 115 is a portion for giving an instruction for making settlement to the settlement plug-in 116. The settlement plug-in 116 executes settlement on the basis of the instruction given by the settlement unit 115. This feature will be explained with reference to Fig. 3.

As can be understood from Fig. 3, the settlement unit 115 and the settlement plug-in 116 exist individually for each type of specific settlement means, such as a credit card settlement plug-in, electronic money settlement plug-in, a convenience store payment settlement plug-in.

Depending on the settlement means, the settlement plug-in 116 requests settlement processing by connecting to the external settlement apparatus 120 which is provided outside of the multi-settlement apparatus 110.

This feature will be explained. Depending on the settlement means, the settlement processing can be complected within the multi-settlement apparatus 110. Four example, settlement means capable of managing values within the multi-settlement apparatus 110, such as electronic money, can complete the settlement processing only in the inside of the multi-settlement apparatus 110. On the other hand, settlement meons which managers values by an external unit has to request the external unit to perform all or a portion of settlement processing. Therefore, for example, in a settlement using a credit card which manages values by an external unit, the settlement plug-in 116 for credit card connects to the credit card settlement apparatus 120 provided outside so as to request the credit card settlement apparatus, 120 to perform settlement processing, and receives a result of the settlement processing. More specifically, the external settlement apparatus 120 is a server provided by a company, a bank, and the like which process credit cards.

When values are managed and settlement is made within the multi-settlement apparatus 110 like electronic money, the settlement plug-in need not connect to an external unit. In such case, processing is completed within the multi-settlement system 100.

In other words, settlement means capable of completing settlement processing only within the multi-settlement apparatus 110 may be configured to perform settlement processing only within the multi-settlement apparatus 110. On the other hand, settlement means incapable of completing settlement processing within the multi-settlement apparatus 110 may be configured to request an external unit provided outside of the multi-settlement apparatus 110 to perform settlement processing. However, the above configuration is not always necessary. For example, even if settlement means is capable of completing settlement processing within the multi-settlement apparatus 110, an external unit may be requested to perform all or a part of the settlement processing.

What is shown in Fig. 3 is a mere example, and it is not necessary to support all of the settlement means, other settlement means may be supported instead of or in addition to these settlement means. The settlement plug-in 116 may be freely added, updated, or deleted in accordance with various kinds of settlement means.

In the present embodiment, information during the process of payment is managed using history information, and payment status is given to history information. Accordingly, the payment process can be managed in the steps of credit completion and sales determination. This feature will be explained with reference to Fig. 4.

As shown at the left side of Fig. 4, a parent settlement history is generated for each "settlement history ID". A payer, a receiver, a settlement price, and a state (credit processing finished, payment made, and the like) are managed using the history information.

In addition, child history information is provided below the parent settlement history. The child settlement history is shown at the right in Fig. 4.

The child settlement history is history information for each settlement means. Then, when all of the statuses of the settlement means change, the status of each settlement means is calculated, and accordingly, the status of the parent history information is changed. By doing so, the history information of the multi-settlement with the multiple settlement means can be managed.

Subsequently, the user terminal 200 will be explained in detail with reference to Fig. 5. In this case, the user terminal 200 is assumed to be achieved with a personal computer. The user terminal 200 includes a main storage device 201, an arithmetic processing device 202, a transmission/reception unit 203, an auxiliary storage device 204, an operation reception unit 205, and a display unit 206.

The main storage device 201 is a storage device such as a RAM. The arithmetic processing device 202 is an arithmetic device such as a CPU, which performs arithmetic processing. The transmission/reception unit 203 is a portion for communicating via the network 900.

The auxiliary storage device 204 is a storage device such as an HDD and an SSD, which stores various kinds of data and programs.

The operation reception unit 205 is a portion for receiving input from a user. More specifically, the operation reception unit 205 is connected to an input device such as a keyboard, a mouse, and a touch panel, and receives input information from such input device.

The display unit 206 is connected to a display device for presenting information to user such as a display, and causes the display device to display the information. Subsequently, overview of operation of the present embodiment will be explained.

The user connects via the network 900 to any site 300 where the user wants to conduct e-commerce such as purchasing of goods and contents. In the settlement procedure at the site 300, the user selects available settlement means in the site 300. At this occasion, the user can make settlement by freely combining available settlement means, and the user can freely specify distributions i.e., how much amount is paid with which settlement means. The site 300 having received the settlement information from the user terminal 200 transmits the settlement information to the multi-settlement system 100 via the network, and requests the settlement processing.

What has been described above is the overview of operation of the present embodiment.

Subsequently, operation of the present embodiment will be explained in detail with reference to Figs. 6 and 7.

The user uses the user terminal 200, and connects to the site 300 via the network (step A1). Accordingly, the settlement procedure of e-commerce is started at the site 300. The site 300 presents a plurality of settlement means available at its own site for the user's settlement (step A2). The settlement means are those selected by the site 300 as settlement means available at the site 300 from among the settlement means provided by the multi-settlement system 100.

The user selects arbitrarily a plurality of settlement means, which the user wants to use, from among the available settlement means. Subsequently, the user specifies the payment price for each of the selected settlement means. For example, in a settlement of which total price to be settled is 10,000 yen, the user selects credit card, electronic money, and convenience store payment as payment settlement means. In addition, the user specifically allocates the price. For example, the settlement price of totally 10,000 yen is allocated to each payment means as follows: 5,000 yen to the credit card, 3,000 yen to the electronic money, and 2,000 yen to the convenience store payment. The combination of the settlement means and the payment price specified for each settlement means can be freely combined. The user uses the user terminal 200 to transmit settlement information about the used settlement means, the payment price of each settlement means, the total price to be settled, and the like, to the site 300 (step A3).

The site 300 transmits the settlement information about the used settlement means, the payment price of each settlement means, the total price to be settled, and the like, which has been received from the user terminal 200, to the multi-settlement system 100, and requests the multi-settlement system 100 to perform settlement processing (step A4).

The multi-settlement system 100 receives the settlement information about the used settlement means, the payment price of each settlement means, the total price to be settled, and the like, frog the site 300, and checks whether the received information involves any problem or not, e.g., whether the total price of each of the payment prices of the settlement means is equal to the total price to be settled (step A5). When there is an error, the multi-settlement system 100 returns a result of error back to the site 300. When the site 300 receives the returned error result, the site 300 displays a message prompting the user to input again. When input is given again from the user, operation is resumed from step A3 again.

Subsequently, the multi-settlement system 100 successively tries settlement processing using each of the specified settlement means. The settlement processing is performed in two steps, i.e., credit processing and sales determination processing.

First, credit processing for determining whether payment by the settlement means in question is possible or not (hereinafter referred to as "authorisation" as necessary) is carried out. The contents of the authorization are different according to settlement means. For example, in a case of credit card, connection is once made to the credit card settlement apparatus 120 provided outside, and card credit state is conformed. In a case of electronic money, the balance of the electronic money managed by the multi-settlement apparatus 110 is confirmed. Any method for carrying out the authorization may be specified for each settlement means.

For example, when there is settlement means of which authorization fails due to lack of the balance of the electronic money, the authorization completion state of settlement means of which authorization has been completed is cancelled, and all the settlements are stopped. More specifically, for settlement means of which authorisation has already been completed, rollback is performed, so that the state is retuned back to the state before the execution of the authorization. Subsequently, the multi-settlement apparatus 110, after the settlement has been stopped and the roll back has been executed, notifies the site 300 that the settlement has been stopped. The site 300 having been notified of the stop of the settlement notifies the user terminal 200 that the settlement has been stopped.

The contents of the notification indicating that the settlement has been stopped may be defined freely. For example, the contents of the notification may be a message simply indicating that the settlement has not been made. Alternatively, the contents of the notification may be more specific. For example, the name of settlement means of which authorization has failed and the reason of the failure may be presented. Examples of reasons include failed authorization processing because the balance is insufficient or the external settlement apparatus 120 is being maintained.

When the user having received this notification about the stop of the settlement makes the same settlement processing upon changing settlement means, new settlement processing is performed all over again which is separate from the previous failed settlement. More specifically, when the balance is insufficient, the price allocated to the settlement means may be decreased, and the price allocated to another settlement means may be increased. Alternatively, settlement means incapable of performing the authorization processing may not be used any more, and another settlement means may be used instead. In this case, operation is resumed from step A3 again on the basis of new allocation by the user. On the other hand, when the authorizations of all the settlement means are completed, the authorization of the settlement is determined to have been completed (step A6).

Likewise, sales determination processing of each settlement means (hereinafter referred to as "confirmation" as necessary) is successively carried out. Like the authorization, the conformation processing is also configured to successively carry out conformation unique to each settlement means. When the confirmations of all the settlement means are completed, the settlement processing is completed. (step A7). When the settlement processing is completed, the multi-settlement system 10 transmits the notification about the completion of the settlement to the site 300. (step A8). When the site 300 receives the notification about the completion of the settlement processing from the multi-settlement system 100, the site 3 00 carries out processing of completion of the settlement, and transmits the notification about the complexion of the settlement to the user terminal 200. (step A9). Accordingly, the settlement method made up of a free combination of multiple settlement means (hereinafter referred to as "multi-settlement" as necessary) is achieved.

### [First modification]

Subsequently, the first modification made by modifying a part of the above embodiment will be explained.

Not only the functions of the settlement unit 115 but also a function for determining a settlement plug-in 116 used by default are provided in the first modification.

If the user specifies settlement means used preferentially in advance, settlement means used by default can be automatically selected when settlement means used by the user is specified in step A3 of Fig. 6.

When the user does not perform any operation when selecting settlement means, the settlement means selected by default can be used, so that this saves the user from performing operation.

In this case, when there is only one type of settlement means selected by the user in advance, all the price to be settled is paid with the settlement means. When multiple settlement means are specified, the ratio of the payment by each settlement means may be specified, so that the payment price is automatically determined for each settlement means, and the multi-settlement is carried out.

More specifically, in the above embodiment, it is necessary to input a settlement price allocated to each settlement means. In the present modification, however, there is an advantage in that it is possible to omit the input of the settlement price by selecting only a ratio to be used.

More specific example is as follows. The user registers credit card and electronic money as settlement means used in normal circumstances in advance, and the usage ratios of them both are set as 60% and 40%. At this occasion, in a case where 10, 000 yen is settled, the settlement is made as follows. When the user makes settlement using default settlement means without specifying any settlement means, the settlement is made using 6,000 yen with the credit card and 4,000 yen with the electronic money. Therefore, the user has only to choose the usage ratios, and it is not necessary to input any specific settlement price such as 6,000 yen and 4,000 yen.

In the above specific example, the settlement price can be divided without any remainder, e.g., into 6,000 yen and 4,000 yen. However, depending on the settlement price and the combination of usage ratios, there may be a fraction. When there is such fraction, the user is required to input the settlement price again. In this case, like the embodiment explained above, the user may be requested to input the settlement price allocated to each settlement means, or may be requested to only select settlement means concerning fractions. When there is a fraction, the multi-settlement apparatus 110 may allocate a fraction to a predetermined settlement means. For example, when the usage ratios are 60% and 40%, the price is allocated with the ratios 60% and 40%, and the generated fraction may be further allocated to the settlement means of 60%. In another specific example, the default setting may be set as follows: the upper limit of the price usable with a credit card is set to 5,000 yen, and the payment of the remaining price is made by electronic money. When the settlement price is equal to or less than 5,000 yen, the settlement may be carried out with only the credit card. When the settlement price is equal to or more than 5,000 yen, the payment may be made using both of the credit card and the electronic money.

The above specific example, is merely an example, and a setting with any given condition may be enabled.

### [Second modification]

Subsequently, the second modification obtained by modifying a part of the above embodiment will be explained.

In the second modification, the settlement plug-in 116 may be freely added to each settlement means.

When new settlement means is to be added with the settlement unit 115 and the settlement plug-in 116 in Fig. 2, a settlement plug-in 116 corresponding to a new settlement means is generated first. The settlement plug-in 116 has an interface for carrying out authorization and confirmation for the settlement unit 115. Processing according to this interface is generated with the contents corresponding to the settlement means which is to be newly added.

The settlement plug-in 116 separately has an interface to an external system for an external settlement apparatus 120. When the new settlement means, which is to be added, requires cooperation with the external system, cooperated processing via the interface with this external system is generated. Therefore, any settlement means can be freely added by generating the settlement plug-in 116.

### [Third modification]

Subsequently, the third modification obtained by modifying a part of the above embodiment will be explained.

The third modification is a method for giving order of precedence to settlement means in advance. For example, the electronic money is given the first level in the order of precedence, and the deduction from bank account is given the second level in the order of precedence. When the total price can be paid with the electronic money, the settlement can be made with only the electronic money, and when the total price cannot be paid With only the electronic money, the remaining price is settled by deduction from a bank account.

A specific configuration for giving the order of precedence in advance may be achieved by storing the order of precedence to the main storage device 111 of the multi-settlement apparatus in advance. Then, in accordance with an instruction given by the settlement unit 115, the arithmetic processing unit 112 reads the order of precedence from the main storage device 111, and displays the order of precedence on the screen of the site 300. When the user determines a settlement price and a usage ratio, the user may also be allowed to change the order of precedence.

By doing so, for example, the user can preferentially consume electronic money or points with which it is difficult purchase a product by itself because only a small amount of balance of electronic money or points remains. In addition, the user can preferentially consume one that the user wants to consume as early as possible because an expiration date is set. Further, the user can preferentially use settlement means which gives many points when it is used.

### [Fourth modification]

Subsequently, the fourth modification obtained by modifying a part of the above embodiment will be explained.

The fourth modification is a modification having a feature when points are given after settlement. Some shopping sites may want users to use particular settlement means. For example, in some cases, a shopping site may want a user to make settlement using electronic money that can be used with only the shopping site in question rather than make settlement with a cash card.

In such case, the points given may be changed for means used for settlement. For example, when settlement is made using a cash card, one percent of the settlement price is given as points, and when settlement is made using electronic money, five percent of the settlement price is given as points.

The present modification is a modification that can support such cases. In the present modification, even when multi-settlement is conducted, the points are given after the settlement is completed, in accordance with the price settled by each settlement means and the point-giving ratio which is different for each settlement means. Therefore, the needs of the shopping sites can be satisfied.

### [Fifth modification]

Subsequently, the fifth modification obtained by modifying a part of the above embodiment will be explained.

It is an object of the fifth modification to simplify user operation.

This will be explained using a specific example. In step A3 of the above embodiment, the user allocates the total settlement price 10,000 yen to each of the payment means, e.g., 5,000 yen is allocated to credit card, 3,000 yen is allocated to electronic money, and 2,000 yen is allocated to convenience store payment. On the other hand, in the fourth modification, in order to simplify this allocation, an input called "remaining price settlement" can be received. Therefore, on the display unit 206 of the user terminal 200, for example, icons such as "remaining price settlement" are displayed for each settlement meals. Then, when the user allocates the total settlement price 10,000 yen to each of the payment means in such a manner that 5,000 yen is allocated to credit card and 3,000 yen is allocated to electronic money, a remaining price settlement instruction, concerning the convenience store payment is given. With this instruction, it is automatically deemed that the user has selected to pay 2,000 with the convenience store payment. More specifically, it is not necessary for the user to specifically input the price 2,000 yen which is the remaining price. Therefore, this simplifies the user operation, and can prevent input error of total price caused by, e.g., user's mistake in input.

The embodiment of the present invention explained above achieves many advantageous effects as follows.

According to the present embodiment, the user can freely select the settlement means using the multiple settlement means provided by the site 300, and can make settlement by combining them. In a conventional technique, settlement processing can be performed with only one type of settlement means, but the present embodiment allows the user to select multiple settlement means, and there is an advantage in that the user can make settlement more freely.

For example, when only a small amount of balance remains in electronic money, the electronic money cannot be used by itself because the balance is insufficient, and this makes the electronic money useless. However, according to the present embodiment, the following payment method can be made: all the balance of electronic money is used, and the remaining amount of the settlement price is paid with a credit card. Therefore, there is an advantage in that the user can enjoy a higher degree of flexibility in settlement, and this increases the opportunity of settlement. Further, when the types of settlement means are increased, the user is encouraged to make more purchases, and in addition, there is an advantage in that it is expected to encourage the user to make more purchases when a combination of settlement means is provided.

According to the present embodiment, the site 300 supports multiple settlement means provided by the multi-settlement system 100 and provides the multiple settlement means to the user, and therefore, this enhances the above advantages for the user, and this provides an advantage in that the site 300 can distinguish itself from services provided by other sites.

Further, according to the present embodiment, the user can use multiple settlement means, and therefore, there is an advantage in that, the user can use settlement means suitable for the purpose of the user by changing a combination of settlement means in accordance with occasions, which provides an advantage in that the convenience for the user can be improved. When the user can make settlement which is convenient for the user, the user is less likely to give up settlement because of insufficient options of settlement means, which provides an advantage in that a company which conducts e-commerce would not lose the opportunity of use of e-commerce by the user.

Further, according to the present embodiment, when there are multiple settlement means, credit check is conducted for each of the settlement means, and when the credit check is rejected because of insufficient balance and the like, the statuses of settlements of which credit checks have already been accepted at that moment are changed, and the settlement is stopped. Therefore, there is an advantage in that this can prevent unnecessary troubles, e.g., refund due to interruption, of settlement based on the lack of balance in the process of settlement.

Further, in the explanation about the above embodiment, a program unique to the present embodiment is stored in the multi-settlement achieving system in advance. Alternatively, a computer may be caused to operate as all or a part of the multi-settlement achieving system, or a program for executing the above processing may be distributed upon being recorded to a computer-readable recording medium such as a flexible disk, a CD-ROM (Compact Disc Read-Only Memory), DVD (Digital Versatile Disc), and an MO (Magneto Optical Disk (Disc)) BD (Blu-ray Disc), and this is installed to another computer to be operated as the above means or execute the above steps.

For example, the multi-settlement achieving system, i.e., the embodiment of the present invention, can be achieved with hardware, but can also be achieved by causing a computer to read and execute a program, which causes the computer to function as the multi-settlement achieving system, from a computer-readable recording medium.

The multi-settlement achieving method according to the embodiment of the present invention, can be achieved with hardware, but can also be achieved by causing a computer to read and execute a program, which causes the computer to execute the method, from a computer-readable recording medium.

Although the embodiment explained above is a preferred embodiment of the present invention, this is not intended to limit the scope of the present invention to only the embodiment explained above, and it is possible to carry out in variously modified form without deviating from the gist of the present invention.

The present application is based on Japanese Patent Application 2010-119311 (filed on May 25, 2010), and claims priority based on Japanese Patent Application No. 2010-119311 under the Paris Convention. The contents disclosed in Japanese Patent Application No. 2010-119311 are incorporated into this specification by reference. Although the details of the embodiment representing the present invention have been described, it should be understood that various changes, substitutions, and alternatives can be made without deviating from the spirit and the scope of the invention defined in the claims. Even if amendment is made to the claims in the prosecution of the application, the inventors understand that the equivalent scope of the claimed invitation is to be maintained.

Some or all of the embodiment explained above may be described as shown in the appendixes below, but are not limited to the configurations below.
(Appendix 1) A multi-settlement apparatus that mutually communicates with a site, which is connected to a terminal used by a user,
   the multi-settlement apparatus including:
   a reception unit that receives, from the site, one or more settlement means selected by the user, at least one of a settlement price allocated to each of the settlement means and a usage ratio allocated to each of the settlement means, and a total price to be settled; a settlement plug-in that is provided for each of the settlement means, and is used for credit processing and determination processing;
   a first settlement professing unit that performs the credit processing using the settlement plug-in for each price obtained by allocating the total price to the settlement means in accordance with the usage ratio or for each settlement price allocated;
   a second settlement processing unit that performs sales determination processing using the settlement plug-in for each price obtained by allocating the total price to the settlement means in accordance with the usage ratio or for each settlement price allocated to each of the settlement means, after the credit processing for all the settlement means has been completed; and
   a transmission unit that determines that the settlement has been completed after the sales determination processing for all of the settlement means had been completed, and transmits to the site a message indicating that the settlement has been finished, wherein when all of the credit processing and the sales determination processing can be performed within the multi-settlement apparatus, the first settlement processing unit and the second settlement processing unit perform the processing within the multi-settlement apparatus, and when the credit processing and the sales determination processing cannot be performed within the multi-settlement apparatus, the first settlement processing unit and the second settlement processing unit request an external unit to perform the processing.
(Appendix 2) The multi-settlement apparatus according to Appendix 1, wherein the reception unit receives settlement means selected by the user, an upper limit of usable price allocated to any given settlement means of the selected settlement means, and a total price to be settled, and
   wherein when the total price is within the upper limit of usable price, the first settlement processing unit and the second settlement processing unit allocate the total price to the any given settlement means, and perform the credit processing and the sales determination processing only on the any given settlement means, and when the total price is not within the upper limit of usable price, the first settlement processing unit and the second settlement processing unit allocate the upper limit of price to the any given settlement means, allocate a price obtained by deducting the upper limit of price from the total price to the settlement means other than the any given settlement means, and perform the credit processing and the sales determination processing.
(Appendix 3) The multi-settlement apparatus according to Appendix 1, wherein the reception unit receives settlement means selected by the user, an order of precedence allocated to each of the selected settlement means, and a total price to be settled, and wherein the first settlement processing unit and the second settlement processing unit perform the credit processing and the sales determination processing on the price that can be settled by settlement means of which order of precedence is the highest, and the first settlement processing unit and the second settlement processing unit allocate a difference between the total price and the price that can be settled by settlement means of which order of precedence is the highest to settlement means other than the settlement means of which order of precedence is the highest, and perform the credit processing and the sales determination processing.
(Appendix 4) The multi-settlement apparatus according to any one of Appendixes 1 to 3, wherein when the credit processing fails in the first settlement processing unit, rollback is performed on settlement means of which credit processing has already been performed, so that the settlement means is returned back to a state in which the credit processing has not yet been performed, and a message indicating that the credit processing has failed and a reason why it has failed are notified to the site.
(Appendix 5) The multi-settlement apparatus according to any one of Appendixes 1 to 4, wherein even when all of the credit processing and the sales determination processing can be performed within the multi-settlement apparatus, the first settlement processing unit and the second settlement processing unit request an external unit to perform a portion or all of the processing.
(Appendix 6) The multi-settlement apparatus according to any one of Appendixes 1 to 5, wherein any settlement plug-in can be added, updated, or deleted.
(Appendix 7) A site connected to the multi-settlement apparatus according to any one of Appendixes 1 to 6, wherein when the transmission unit transmits the message indicating that the settlement has been finished, the site gives the user a point calculated by multiplying the settled price and a point giving rate that is set for each of the settlement means.
(Appendix 8) A multi-settlement method performed by a multi-settlement apparatus, that mutually communicates with a site, which is connected to a terminal used by a user,
   the multi-settlement method including:
   a reception step for receiving, from the site, one or more settlement means selected by the user, at least once of a settlement price allocated to each of the settlement means and a usage ratio allocated to each of the settlement means, and a total price to be settled; a step for preparing a settlement plug-in that is provided for each of the settlement means, and is used for credit processing and sales determination processing;
   a first settlement step in which the credit processing is performed using the settlement plug-in for each price obtained by allocating the total price to the settlement means in accordance with the usage ratio or for each settlement price allocated;
   a second settlement step in which sales determination processing is performed using the settlement plug-in for each price obtained by allocating the total price to the settlement means in accordance with the usage ratio or for each settlement price allocated to each of the settlement means, after the credit processing for all the settlement means has been completed; and
   a transmission step in which the settlement is determined to have been complected after the sales determination processing for all of the settlement means had been completed, and a message indicating that the settlement has been finished is transmitted to the site, wherein in the first settlement step and the second settlement step, when all of the
   credit processing and the sales determination processing can be performed within the multi-settlement apparatus, the processing is performed within the multi-settlement apparatus, and when the credit processing and the sales determination processing cannot be performed within the multi-settlement apparatus, an external unit is requested to perform the processing.
(Appendix 9) A multi-settlement program incorporated into a multi-settlement apparatus that mutually communicates with a site, which is connected to a terminal used by a user,
   wherein the multi-settlement program causes a computer to function as the multi-settlement apparatus including:
   a reception unit that receives, from the site, one or more settlement means selected by the user, at least one of a settlement price allocated to each of the settlement means and a usage ratio allocated to each of the settlement means, and a total price to be settled; a settlement plug-in that is provided for each of the settlement means, and is used for credit processing and determination processing;
   a first settlement processing unit that performs the credit processing using the settlement plug-in for each price obtained by allocating the total price to the settlement means in accordance With the usage ratio or for each settlement price allocated;
   a second settlement processing unit that performs sales determination processing using the settlement plug-in for each price obtained by allocating the total price to the settlement means in accordance with the usage ratio or for each settlement price allocated to each of the settlement means, after the credit processing for all the settlement means has been completed; and
   a transmission unit that determines that the settlement has been completed after the sales determination processing for all of the settlement means had been completed, and transmits to the site a message indicating that the settlement has been finished, wherein when all of the credit processing and the sales determination processing can be performed within the multi-settlement apparatus, the first settlement processing unit and the second settlement processing unit perform the processing within the multi-settlement apparatus, and when the credit processing and the sales determination processing cannot be performed within the multi-settlement apparatus, the first settlement processing unit and the second settlement processing unit request an external unit to perform the processing.
(Appendix 10) The multi-settlement program according to Appendix 9, wherein the reception unit receives settlement means selected by the user, an upper limit of usable price allocated to any given settlement means of the selected settlement means, and a total price to be settled, and
   wherein when the total price is within the upper limit of usable price, the first settlement processing unit and the second settlement processing unit allocate the total price to the any given settlement means, and perform the credit processing and the sales determination processing only on the any given settlement means, and
   when the total price is not within the upper limit of usable price, the first settlement processing unit and the second settlement processing unit allocate the upper limit of price to the any given settlement means, allocate a price obtained by deducting the upper limit of price from the total price to the settlement means other than the any given settlement means, and perform the credit processing and the sales determination processing.
(Appendix 11) The multi-settlement program according to Appendix 9, wherein the reception unit receives settlement means selected by the user, an order of precedence allocated to each of the selected settlement means, and a total price to be settled, and wherein the first settlement processing unit and the second settlement processing unit perform the credit processing and the sales determination processing on the price that can be settled by settlement means of which order of precedence is the highest, and the first settlement processing unit and the second settlement processing unit allocate a difference between the total price and the price that can be settled by settlement means of which order of precedence is the highest to settlement means other than the settlement means of which order of precedence is the highest, and performs the credit processing and the sales determination processing.
(Appendix 12) The multi-settlement program according to any one of Appendixes 9 to 11, wherein when the credit processing fails in the first settlement processing unit, rollback is performed on settlement means of which credit processing has already been performed, so that the settlement means is returned back to a state in which the credit processing has not yet been performed, and a message indicating that the credit processing has failed and a reason why it has failed are notified to the site.
(Appendix 13) The multi-settlement program according to any one of Appendixes 9 to 12, wherein even when all of the credit processing and the sales determination processing can be performed within the multi-settlement apparatus, the first settlement processing unit and the second settlement processing unit request an external unit to perform a portion or all of the processing.
(Appendix 14) The multi-settlement program according to any one of Appendixes 9 to 13, wherein any settlement plug-in can be added, updated, or deleted.

### {Industrial Applicability}

The present invention is suitable for electronic settlement that is made on a shopping site and the like providing multiple settlement means, for example, on the Internet, mobile network, and next-generation network. The present invention is also suitable for a settlement agent market which provides a function of making settlement on behalf of a site that requires settlement such as a shopping site.

## Claims

1. A multi-settlement apparatus that mutually communicates with a site, which is connected to a terminal used by a user, the multi-settlement apparatus comprising:
a reception unit that receives, from the site, one or more settlement means selected by the user, at least one of a settlement price allocated to each of the settlement means and a usage ratio allocated to each of the settlement means,
and a total price to be settled;
a settlement plug-in that is provided for each of the settlement means, and is used for credit processing and sales determination processing;
a first settlement processing unit that performs the credit processing using the settlement plug-in for each price obtained by allocating the total price to the settlement means in accordance with the usage ratio or for each settlement price allocated;
a second settlement processing unit that performs sales determination processing using the settlement plug-in for each price obtained by allocating the total price to the settlement means in accordance with the usage ratio or
for each settlement price allocated to each of the settlement means, after the credit processing for all the settlement means has been completed; and
a transmission unit that determines that the settlement has been completed after the sales determination processing for all of the settlement means had been completed, and transmits to the site a message indicating that the settlement has been finished,
wherein when all of the credit processing and the sales determination processing can be performed within the multi-settlement apparatus, the first settlement processing unit and the second settlement processing unit perform the processing within the multi-settlement apparatus, and when the credit processing and the sales determination processing cannot be performed within the multi-settlement apparatus, the first settlement processing unit and the second settlement processing unit request an external unit to perform the processing.

2. The multi-settlement apparatus according to claim 1, wherein the reception unit receives settlement means selected by the user, an upper limit of usable price allocated to any given settlement means of the selected settlement means, and a total price to be settled, and
wherein when the total price is within the upper limit of usable price, the first settlement processing unit and the second settlement processing unit allocate the total price to the any given settlement means, and performs the credit processing and the sales determination processing only on the any given settlement means, and
when the total price is not within the upper limit of usable price, the first settlement processing unit and the second settlement processing unit allocate the upper limit of price to the any given settlement means, allocates a price obtained by deducting the upper limit of price from the total price to the settlement means other than the any given settlement means, and performs the credit processing and the sales determination processing.

3. The multi-settlement apparatus according to claim 1, wherein the reception unit receives settlement means selected by the user, an order of precedence allocated to each of the selected settlement means, and a total price to be settled, and
wherein the first settlement processing unit and the second settlement processing unit performs the credit processing and the sales determination processing on the price that can be settled by settlement means of which order of precedence is the highest, and
the first settlement processing unit and the second settlement processing unit allocate a difference between the total price and the price that can be settled by settlement means of which order of precedence is the highest to settlement means other than the settlement means of which order of precedence is the highest, and performs the credit processing and the sales determination processing.

4. The multi-settlement apparatus according to any one of claims 1 to 3, wherein when the credit processing fails in the first settlement processing unit, rollback is performed on settlement means of which credit processing has already been performed, so that the settlement means is returned back to a state in which the credit processing has not yet been performed, and a message indicating that the credit processing has failed and a reason why it has failed are notified to the site.

5. The multi-settlement apparatus according to any one of claims 1 to 4,
wherein even when all of the credit processing and the sales determination processing can be performed within the multi-settlement apparatus, the first settlement processing unit and the second settlement processing unit request an external unit to perform a portion or all of the processing.

6. The multi-settlement apparatus according to any one of claims 1 to 5, wherein any settlement plug-in can be added, updated, or deleted.

7. A site connected to the multi-settlement apparatus according to any one of claims 1 to 6, wherein when the transmission unit transmits the message indicating that the settlement has been finished, the site gives the user a point calculated by multiplying the settled price and a point giving rate that is set for each of the settlement means.

8. A multi-settlement method performed by a multi-settlement apparatus that mutually communicates with a site, which is connected to a terminal used by a user,
the multi-settlement method comprising:
a reception step for receiving, from the site, one or more settlement means selected by the user, at least one of a settlement price allocated to each of the settlement means and a usage ratio allocated to each of the settlement means,
and a total price to be settled;
a step for preparing a settlement plug-in that is provided for each of the settlement means, and is used for credit processing and sales determination processing;
a first settlement step in which the credit processing is performed using the settlement plug-in for each price obtained by allocating the total price to the settlement means in accordance with the usage ratio or for each settlement price allocated;
a second settlement step in which sales determination processing is performed using the settlement plug-in for each price obtained by allocating the total price to the settlement means in accordance with the usage ratio or for each settlement price allocated to each of the settlement means, after the credit processing for all the settlement means has been completed; and
a transmission step in which the settlement is determined to have been completed after the sales determination processing for all of the settlement means had been completed, and a message indicating that the settlement has been finished is transmitter to the site,
wherein in the first settlement step and the second settlement step, when all of the credit processing and the sales determination processing can be performed within the multi-settlement apparatus, the processing is performed within the multi-settlement apparatus, and when the credit processing and the sales determination processing cannot be performed within the multi-settlement apparatus, an external unit is requested to perform the processing.

9. A multi-settlement program incorporated into a multi-settlement apparatus that mutually communicates with a site, which is connected to a terminal used by a user,
wherein the multi-settlement program causes a computer to function as the multi-settlement apparatus comprising:
a reception unit that receives, from the site, one or more settlement means selected by the user, at least one of a settlement price allocated to each of the settlement means and a usage ratio allocated to each of the settlement means,
and a total price to be settled;
a settlement plug-in that is provided for each of the settlement means, and is used for credit processing and sales determination processing;
a first settlement processing unit that performs the credit processing using the settlement plug-in for each price obtained by allocating the total price to the settlement means in accordance with the usage ratio or for each settlement price allocated;
a second settlement processing unit that performs sales determination processing using the settlement plug-in for each price obtained by allocating the total price to the settlement means in accordance with the usage ratio or
for each settlement price allocated to each of the settlement means, after the credit processing for all the settlement means has been completed; and
a transmission unit that determines that the settlement has been completed after the sales determination processing for all of the settlement means had been completed, and transmits to the site a message indicating that the settlement has been finished,
wherein when all of the credit processing and the sales determination processing can be performed within the multi-settlement apparatus, the first settlement processing unit and the second settlement processing unit perform the processing within the multi-settlement apparatus, and when the credit processing and the sales determination processing cannot be performed within the multi-settlement apparatus, the first settlement processing unit and the second settlement processing unit request an external unit to perform the processing.
